# EUROPEAN PATENT APPLICATION

(11) **EP 4 629 365 A1**
(43) Date of publication of application: **08.10.2025**
(21) Application number: 24213913.7
(22) Date of filing: 19.11.2024
(51) Int. Cl.: H01M 10/04, H01M 10/0525, H01M 10/0583, H01M 50/406, H01M 50/46, H01M 50/463, H01M 50/466, H01M 50/538, H01M 50/55

(54) **THERMAL COMPOSITE LAMINATED CELL AND METHOD FOR PREPARING THERMAL COMPOSITE LAMINATED CELL**

(30) Priority: 03.04.2024 CN 202410404589; 03.04.2024 CN 202420686693 U
(71) Applicant: Eve Power Co., Ltd., Jingmen, Hubei 448000 (CN)
(72) Inventor: LI, Weibo, Jingmen, Hubei 448000 (CN); CHEN, Wei, Jingmen, Hubei 448000 (CN); YUAN, Dingding, Jingmen, Hubei 448000 (CN); CHEN, Liquan, Jingmen, Hubei 448000 (CN); SU, Bin, Jingmen, Hubei 448000 (CN); HE, Wei, Jingmen, Hubei 448000 (CN); LIU, Jincheng, Jingmen, Hubei 448000 (CN)
(74) Representative: Berggren Oy

(57) **Abstract**

The disclosure provides a thermal composite laminated cell and a method for preparing the thermal composite laminated cell. The thermal composite laminated cell includes N negative electrode sheets (100), M positive electrode sheets (200), and a separator (300), N is greater than M, and a value of a difference between N and M is 1; the separator (300) includes a plurality of body parts (310) and bending parts (320) alternately and continuously arranged; the negative electrode sheets (100) and the positive electrode sheets (200) are alternately stacked in a thickness direction of the negative electrode sheets (100), adjacent one of the negative electrode sheets (100) and one of the positive electrode sheets (200) are separated by one of the body parts (310), the bending parts (320) are provided with incomplete-cut-off structures (330), and the separator (300) is folded at the incomplete-cut-off structures (330); two outermost negative electrode sheets (100) are single-sided electrode sheets (100B), and other negative electrode sheets (100) are double-sided electrode sheets (100A).

## Description

### TECHNICAL FIELD

The disclosure relates to the field of battery, and in particular, to a thermal composite laminated cell and a method for preparing the thermal composite laminated cell.

### BACKGROUND

At present, cells of a battery are mainly prepared by laminate or winding processes. The laminated cell has been widely used due to its numerous advantages. Electrode sheets of the laminated cell are in a free-fall state during the laminated process, and negative electrode sheets and positive electrode sheets in the laminated cell are misaligned, resulting in poor alignment of the laminated cell. During the charging process of the battery, lithium ions are deintercalated from the positive electrode sheets and intercalated into the negative electrode sheets. Due to the misalignment between the positive electrode sheets and the negative electrode sheets, lithium ions cannot be completely intercalated into the negative electrode sheets. Further, the lithium ions that cannot be intercalated into the negative electrode sheets can only obtain electrons on the surface of the negative electrode sheets, forming white metallic lithium and leading to precipitation of lithium. The precipitation of lithium significantly shortens the cycle life of the battery, limits the fast charging capacity of the battery, and may also cause situations such as combustion and explosion, posing safety hazards and reducing the performance of the battery.

In related art, in order to improve the alignment of the laminated cell, a reshaping process is added to the production process of the laminated cell. After a thermal composite laminated unit freely fall and is folded to form the cell, a reshaping cylinder is used to clamp the cell from two sides of the cell to align the electrode sheets in the cell. However, using the reshaping cylinder to reshape the cell still has the problem of poor alignment of the cell, and there is a risk of powder falling off the electrode sheets during the reshaping process of the reshaping cylinder, increasing the risk of short circuit of the cell.

### SUMMARY

Embodiments of the disclosure provide a thermal composite laminated cell and a method for preparing the thermal composite laminated cell. By setting incomplete-cut-off structures in bending parts of a separator in the thermal composite laminated cell, the separator can be folded at the incomplete-cut-off structures, achieving the technical effects of good folding quality, high folding efficiency, and good alignment.

In a first aspect, some embodiments of the disclosure provide a thermal composite laminated cell, including:
N negative electrodes, in which N is a positive integer greater than 1;
M positive electrodes, in which M is a positive integer greater than 1, N is greater than M, and a value of a difference between N and M is 1; and
a separator including a plurality of body parts and a plurality of bending parts alternately and continuously arranged, in which the negative electrode sheets and the positive electrode sheets are alternately stacked in a thickness direction of the negative electrode sheets, and adjacent one of the negative electrode sheets and one of the positive electrode sheets are separated by one of the body parts; and the bending parts are provided with incomplete-cut-off structures, and the separator is folded at the incomplete-cut-off structures;
in which two outermost negative electrode sheets of the N negative electrode sheets are single-sided electrode sheets, and other negative electrode sheets of the N negative electrode sheets except for the two outermost negative electrode sheets are double-sided electrode sheets.

In a second aspect, some embodiments of the disclosure provide a method for preparing the thermal composite laminated cell as discussed above, including:
providing N negative electrode sheets, M positive electrode sheets, and the separator, in which the N negative electrode sheets include N-2 double-sided electrode sheets and two single-sided electrode sheets;
thermally compounding the N-2 double-sided electrode sheets, the M positive electrode sheets, and a separator to form a plurality of laminated layers, in which the N-2 double-sided electrode sheets are thermally compounded on a side of the separator, the M positive electrode sheets are thermally compounded on another side of the separator, and the N-2 double-sided electrode sheets and the M positive electrode sheets are alternately arranged in a length direction of the separator; and treating the separator in the laminated layers to form the incomplete-cut-off structures, in which the incomplete-cut-off structures are disposed in the separator between one of the N-2 double-sided electrode sheets and one of the M positive electrode sheets; and
folding the laminated layers along lines where the incomplete-cut-off structures are located to form a plurality of laminated units, and thermally compounding the two single-sided electrode sheets on two outermost sides of the laminated units, respectively, so as to form the thermal composite laminated cell.

In a third aspect, some embodiments of the disclosure provide a method for preparing the thermal composite laminated cell as discussed above, including:
providing N negative electrode sheets, M positive electrode sheets, and a separator including a first separator and a second separator, in which the N negative electrode sheets include N-2 double-sided electrode sheets and two single-sided electrode sheets;
thermally compounding the N-2 double-sided electrode sheets, the M positive electrode sheets, the first separator, and the second separator to form a plurality of laminated layers, in which the M positive electrode sheets are alternately arranged between the first separator and the second separator, the N-2 double-sided electrode sheets are alternately arranged on a side of the first separator away from the M positive electrode sheets and a side of the second separator away from the M positive electrode sheets, and the N-2 double-sided electrode sheets are aligned with the M positive electrode sheets; and treating the first separator and the second separator in the laminated layers to form the incomplete-cut-off structures, in which the incomplete-cut-off structures are disposed in at least one of the first separator and the second separator between adjacent two of the M positive electrode sheets; and
folding the laminated layers along lines where the incomplete-cut-off structures are located to form a plurality of laminated units, and thermally compounding the two single-sided electrode sheets on two outermost sides of the laminated units, respectively, so as to form the thermal composite laminated cell.

In the thermal composite laminated cell and the method for preparing the thermal composite laminated cell provided by the embodiments of the disclosure, the thermal composite laminated cell includes N negative electrode sheets, M positive electrode sheets, and the separator, and the number of the negative electrode sheets is one more than the number of the positive electrode sheets; the separator includes the body parts and the bending parts, adjacent two body parts are connected through one of the bending parts, and each of the bending parts is provided with the incomplete-cut-off structures; the negative electrode sheets and the positive electrode sheets are alternately stacked in the thickness direction of the negative electrode sheets, each of the positive electrode sheets is disposed between adjacent two negative electrode sheets, and adjacent one of the negative electrode sheets and one of the positive electrode sheets are separated by one of the body parts. The disclosure prevents the direct contact between the positive electrode sheets and the negative electrode sheets from causing short circuit. In the disclosure, the separator is not completely cut off and can be continuously folded along the lines where the incomplete-cut-off structures are located, and each time it can be folded along the lines where the incomplete-cut-off structures are located, therefore, the folding position is fixed, ensuring the alignment between the positive electrode sheets and the negative electrode sheets in the thermal composite laminated cell. Moreover, because two outermost negative electrode sheets are single-sided electrode sheets and other negative electrode sheets are double-sided electrode sheets, and the outermost negative electrode sheet does not need to be cladded with any separator, reducing material input, thereby reducing cost. Based on the above, the disclosure improves the problem of poor alignment of existing thermal composite laminated cells. Since the alignment of the thermal composite laminated cell is good, the disclosure reduces the occurrence of the precipitation of lithium, improves the electrical performance of the thermal composite laminated cell in terms of cycle life, fast charging capacity, safety, and other aspects.

### BRIEF DESCRIPTION OF THE DRAWINGS

In order to explain technical solutions in embodiments of the disclosure more clearly, the following will briefly introduce the drawings needed to be used in description of the embodiments. Apparently, the drawings in the following description are only some embodiments of the disclosure. For ordinary skilled in the art, other drawings can be obtained from these drawings without paying creative effort.

In order to understand the disclosure and beneficial effects thereof more completely, the following will be described in combination with the drawings. In the following description, the same reference numerals indicate the same elements.
FIG. 1 is a three-dimensional diagram of a thermal composite laminated cell provided in some embodiments of the disclosure.
FIG. 2 is a top view of the thermal composite laminated cell provided in some embodiments of the disclosure.
FIG. 3 is a first cross-sectional view taken along line A-A in FIG. 2.
FIG. 4 is a local enlarged view at position A in FIG. 3.
FIG. 5 is a second cross-sectional view taken along line A-A in FIG. 2.
FIG. 6 is a local enlarged view at position B in FIG. 5.
FIG. 7 is a labeled diagram of the thermal composite laminated cell provided in some embodiments of the disclosure.
FIG. 8 is a schematic diagram of a laminated layer in the method for preparing a thermal composite laminated cell provided in some embodiments of the disclosure.
FIG. 9 is another schematic diagram of the laminated layer in the method for preparing the thermal composite laminated cell provided in some embodiments of the disclosure.

### DETAILED DESCRIPTION

The following will provide a clear and complete description of the technical solutions in the embodiments of the disclosure, in conjunction with the drawings. Apparently, the described embodiments are only a part of the embodiments of the disclosure, not all of them. Based on the embodiments of the disclosure, all other embodiments obtained by those skilled in the art without creative labor are within the scope of protection of the disclosure.

The following will provide a detailed description of a thermal composite laminated cell according to some embodiments of the disclosure in conjunction with the drawings.

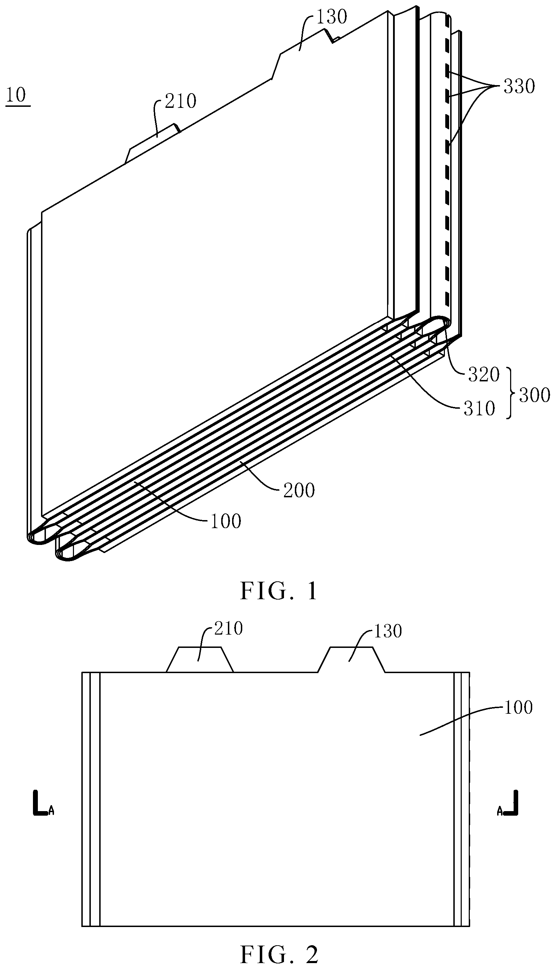

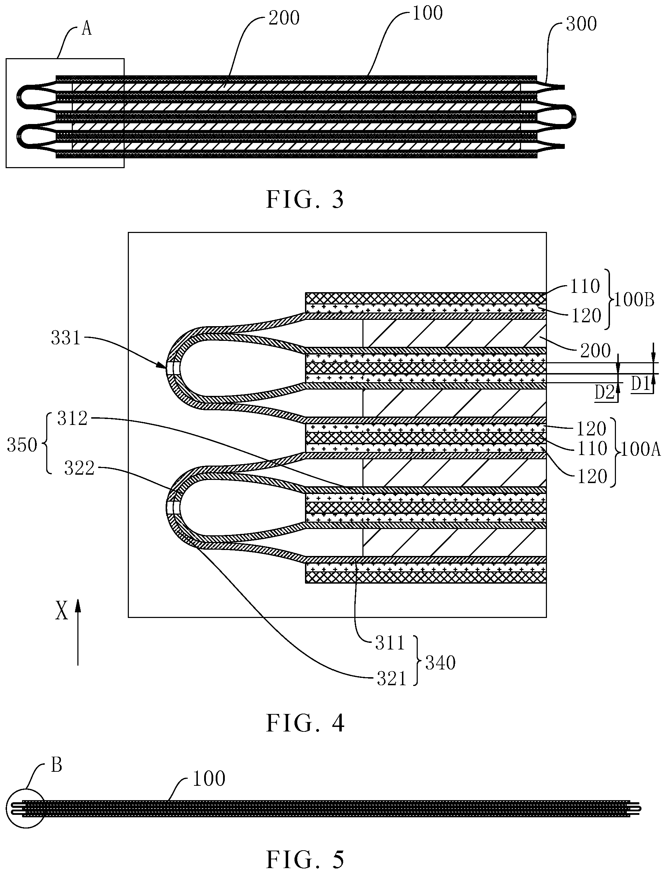

Referring to FIGs. 1 to 4, FIG. 1 is a three-dimensional diagram of a thermal composite laminated cell provided in some embodiments of the disclosure, FIG. 2 is a top view of the thermal composite laminated cell provided in some embodiments of the disclosure, FIG. 3 is a first cross-sectional view taken along line A-A in FIG. 2, and FIG. 4 is a local enlarged view at position A in FIG. 3. Some embodiments of the disclosure provide a thermal composite laminated cell including N negative electrode sheets 100, M positive electrode sheets 200, and a separator 300. The thermal composite laminated cell can be used as an energy storage unit for batteries, so that the batteries can convert the energy stored in the thermal composite laminated cell into electric current and supply it for use in electronic devices.

In some embodiments, as illustrated in FIG. 1, the negative electrode sheets 100 and the positive electrode sheets 200 are prepared by cutting a negative electrode material roll and a positive electrode material roll, respectively. Shapes of the negative electrode sheets 100 and the positive electrode sheets 200 are rectangular. The negative electrode sheets 100 are provided with a plurality of negative tabs 130, and the positive electrode sheets 200 are provided with a plurality of positive tabs 210. Both the negative tabs 130 and the positive tabs 210 extend out of the separator 300. In some embodiments, both the positive tabs 210 and the negative tabs 130 are partially located outside the separator 300.

In the embodiments of the disclosure, N negative electrode sheets 100 and M positive electrode sheets 200 are provided. Both N and M are positive integers greater than 1, N is greater than M, and a value of a difference between N and M is 1. The number of N and M are multiple and determined according to the energy storage design of a laminated cell, but the number of the negative electrode sheets 100 is always one more than the number of the positive electrode sheets 200.

In some embodiments, as illustrated in FIG. 1, the separator 300 is a continuous film. The separator 300 includes a plurality of body parts 310 and a plurality of bending parts 320 that are alternately and continuously arranged. The plurality of body parts 310 are stacked in a thickness direction X of the negative electrode sheets 100, and adjacent two body parts 310 are connected through one of the bending parts 320. At least one of the bending parts 320 is provided with incomplete-cut-off structures 330, and the separator 300 is folded at the incomplete-cut-off structures 330. For example, materials of the separator 300 may include at least one of polypropylene, polyethylene, polyethylene terephthalate, polybutylene terephthalate, ethylene-propylene copolymer, and cellulose.

In some embodiments, as illustrated in FIG. 3 and FIG. 4, the negative electrode sheets 100 and the positive electrode sheets 200 are alternately stacked in the thickness direction X of the negative electrode sheets 100. Each of the positive electrode sheets 200 is disposed between adjacent two negative electrode sheets 100, and adjacent one of the negative electrode sheets 100 and one of the positive electrode sheets 200 are separated by one of the body parts 310. Two outermost negative electrode sheets 100 are single-sided electrode sheets 100B, and other negative electrode sheets 100 except for the two outermost negative electrode sheets 100 are double-sided electrode sheets 100A. Orthographic projections of the positive electrode sheets 200 and the negative electrode sheets 100 in the thickness direction X of the negative electrode sheets 100 completely fall within a planar area where the body parts 310 between them are located, so that the body parts 310 can completely separate the negative electrode sheets 100 and the positive electrode sheets 200, preventing the contact between the positive electrode sheets 200 and the negative electrode sheets 100 from causing short circuit. The planar area where the body parts 310 are located, is a continuous planar area surrounded by the outer contour of the orthographic projection of the body parts 310 in the thickness direction of the negative electrode sheets 100.

It can be understood that before folding, the separator 300 presents a continuous band-like structure, the negative electrode sheets 100 and the positive electrode sheets 200 are compounded on the body parts 310 of the separator 300 to form a plurality of laminated layers, and the incomplete-cut-off structures 330 are disposed in the separator 300. Distances from two opposite sides of one of the incomplete-cut-off structures 330 to one of the negative electrode sheets 100 at a side where the one of the incomplete-cut-off structures 330 is located, are the same or approximately the same. The laminated layers are folded along the lines where the incomplete-cut-off structures 330 are located. The folding position of the laminated layers is fixed, which improves the alignment during the folding process, avoids the occurrence of precipitation of lithium that pierces the separator 300 due to the dislocation between the negative electrode sheets 100 and the positive electrode sheets 200, and improves the electrical performance of the laminated cell. Moreover, the single-sided electrode sheets 100B are used as the outermost negative electrode sheets 100, because the single-sided electrode sheets 100B do not require active material layers on their outermost sides, it reduces material input, thereby reducing cost.

In some embodiments, the negative electrode sheets 100, the positive electrode sheets 200, and the separator 300 are thermally compounded and connected. The negative electrode sheets 100 and the positive electrode sheets 200 are thermally compounded on the separator 300, indicating that the negative electrode sheets 100 and the positive electrode sheets 200 are fixed on surfaces of the separator 300 through a thermally compounding process. For example, the thermally compounding process includes the following steps: feeding a positive electrode material roll, a negative electrode material roll, and a separator simultaneously; before entering a heating device, cutting the positive electrode sheets 200 and the negative electrode sheets 100 into individual electrode sheets of the required size by cutting blades; and placing the positive electrode sheets 200, the negative electrode sheets 100, and the separator 300 into a heating system under the action of a roller. The separator 300 may be a coated separator that becomes sticky when heated. After baking, thermally compounding the positive electrode sheets 200 and the negative electrode sheets 100 on the separator 300, and then rolling and cutting to form a plurality of laminated layers.

In some embodiments, as illustrated in FIG. 1 and FIG. 2, orthographic projections of all the negative tabs 130 in the thickness direction X of the negative electrode sheets 100 overlap with each other, and orthographic projections of all the positive tabs 210 in the thickness direction X of the negative electrode sheets 100 overlap with each other. The negative tabs 130 are stacked with the negative electrode sheets 100, and the positive tabs 210 are stacked with the positive electrode sheets 200. A distance between adjacent two negative tabs 130 is equal to a thickness of one of the body parts 310, and the orthographic projections of all the negative tabs 130 are at the same position; and a distance between adjacent two positive tabs 210 is equal to a thickness of one of the body parts 310, and the orthographic projections of all the positive tabs 210 are at the same position, making it convenient for all the negative tabs 130 to be welded together and all the positive tabs 210 to be welded together, and enabling the negative tabs 130 and the positive tabs 210 to occupy less space.

In some embodiments, as illustrated in FIG. 1 and FIG. 2, an orthographic projection of the negative tabs 130 and an orthographic projection of the positive tabs 210 on a plane where the body parts 310 are located, are arranged side by side. One of the negative electrode sheets 100 and one of the positive electrode sheets 200 are disposed on two opposite sides of one of the body parts 310, respectively. The orthographic projection of the negative tabs 130 and the orthographic projection of the positive tabs 210 on the plane where the body parts 310 are located, are arranged at intervals, preventing the interference between the negative tabs 130 and the positive tabs 210, and ensuring electrical safety.

In some embodiments, as illustrated in FIG. 4, at least one of the double-sided electrode sheets 100A includes a negative current collector 110 and two negative active layers 120, and the two negative active layers 120 are disposed on two opposite sides of the negative current collector 110, respectively.

In some embodiments, at least one of the single-sided electrode sheets 100B includes the negative current collector 110 and one negative active layer 120 disposed on a surface of the negative current collector 110. For example, the negative current collector 110 is made from copper, and the negative active layer 120 is made from graphite.

In some embodiments, as illustrated in FIG. 4, from the bottom to the top of the negative electrode sheets 100, the N negative electrode sheets 100 are successively a first negative electrode sheet 100, a second negative electrode sheet 100..., and a Nth negative electrode sheet 100 in the thickness direction X of the negative electrode sheets 100. The first negative electrode sheet 100 and the Nth negative electrode sheet 100 are located on two outermost sides of the thermal composite laminated cell. Both the first negative electrode sheet 100 and the Nth negative electrode sheet 100 adapt the single-sided electrode sheets 100B, and the other negative electrode sheets 100 adapt the double-sided electrode sheets 100A. A surface of the negative current collector 110 of the first negative electrode sheet 100 close to the body parts 310 is provided with one negative active layer 120, and a surface of the negative current collector 110 of the Nth negative electrode sheet 100 close to the body parts 310 is provided with one negative active layer 120 either.

The outermost negative electrode sheets 100 of the thermally composite cell adapt the single-sided electrode sheets 100B, which can reduce the use of negative active materials, thereby reducing processing cost. Moreover, the outermost sides of the single-sided electrode sheets 100B do not need to be cladded with the separator 300, reducing the amount of materials of the separator, further reducing the processing cost. Compared to related art, the design reduces the thickness of the thermal composite laminated cell by omitting two negative active layers 120 and two layers of separators.

In some embodiments, there are a plurality of separators 300, and the plurality of separators 300 are stacked in the thickness direction X of the negative electrode sheets 100. For example, the cell may include a double-layer separator or more layers of separators. The embodiments of the disclosure are described by taking the double-layer separator as an example, and other embodiments of the separator with other numbers of layers can be adaptively designed according to the double-layer separator in the embodiments.

In some embodiments, as illustrated in FIG. 3 and FIG. 4, the separator 300 includes a first separator 340 and a second separator 350, both of which are folded in a Z-shape to form the body parts 310 and the bending parts 320. The negative electrode sheets 100 and the positive electrode sheets 200 are alternately stacked in the thickness direction X of the negative electrode sheets 100, and adjacent one of the positive electrode sheets 200 and one of the negative electrode sheets 100 are separated by one of the body parts 310. The incomplete-cut-off structures 330 are provided on at least one of the bending parts 320 of the first separator 340 and the bending parts 320 of the second separator 350. For example, all the incomplete-cut-off structures 330 are disposed on the first separator 340; alternatively, all the incomplete-cut-off structures 330 are disposed on the second separator 350; alternatively, a part of the incomplete-cut-off structures 330 are disposed on the first separator 340, and another part of the incomplete-cut-off structures 330 are disposed on the second separator 350; and alternatively, the incomplete-cut-off structures 330 are disposed on both the first separator 340 and the second separator 350, and the numbers and positions of the incomplete-cut-off structures 330 on the first separator 340 and the second separator 350 are respectively the same.

For example, as illustrated in FIG. 4, the cell includes a double-layer separator 300, which includes the first separator 340 and the second separator 350. The first separator 340 includes a plurality of first body parts 311 and a plurality of first bending parts 321. The second separator 350 includes a plurality of second body parts 312 and a plurality of second bending parts 322. Each of the negative electrode sheets 100 is disposed between any adjacent one of the first body parts 311 and one of the second body parts 312. Each of the positive electrode sheets 200 is disposed between any adjacent two first body parts 311, and between any adjacent two second body parts 312. The incomplete-cut-off structures 330 are disposed on both the first separator 340 and the second separator 350. Orthographic projections of the incomplete-cut-off structures 330 on the first separator 340 on the second separator 350 overlap with the continuous planar area surrounded by the outer contour of the incomplete-cut-off structures 330 on the second separator 350. When the separator 300 is folded, both the first separator 340 and the second separator 350 are folded along the same line, ensuring that the body parts 310 of each layer in the laminated cell are aligned, thereby improving the alignment of the laminated cell.

For example, as illustrated in FIG. 4, the first bending parts 321 can be in contact with and connected to the second bending parts 322. As long as a part of one of the first bending parts 321 is in contact with one of the second bending parts 322, it can be considered that the two bending parts are in contact with and connected to each other. In some embodiments, the first bending parts 321 may not be in contact with the second bending parts 322, and the disclosure does not limit on this.

As illustrated in FIG. 3, FIG. 4, and FIG. 8, before the separator 300 is folded, both the first separator 340 and the second separator 350 are continuous band-like structures. The positive electrode sheets 200 are compounded between the first separator 340 and the second separator 350, and the double-sided electrode sheets 100A are compounded on a side of the first separator 340 away from the positive electrode sheets 200 and a side of the second separator 350 away from the positive electrode sheets 200 to form a plurality of laminated layers. The incomplete-cut-off structures 330 are disposed between adjacent negative electrode sheets 100. Distances from two opposite sides of one of the incomplete-cut-off structures 330 to one of the negative electrode sheets 100 at a side where the one of the incomplete-cut-off structures 330 is located are the same, and the separator 300 (the first separator 340 and the second separator 350) is folded at the incomplete-cut-off structures 330. The incomplete-cut-off structures 330 can release the stress generated by folding, making it easy for the separator 300 to be folded at the incomplete-cut-off structures 330, thereby limiting the folding position and improving the folding quality and folding efficiency.

The embodiments of the disclosure limit the folding position of the separator 300 by setting the incomplete-cut-off structures 330, enabling the separator 300 to be folded at basically the same position, ensuring the alignment of the negative electrode sheets 100 and the positive electrode sheets 200 in the laminated cell, avoiding the occurrence of precipitation of lithium that pierces the separator 300 due to the dislocation between the negative electrode sheets 100 and the positive electrode sheets 200, thereby improving the electrical performance of the laminated cell in terms of service life, fast charging capacity, safety, and other aspects.

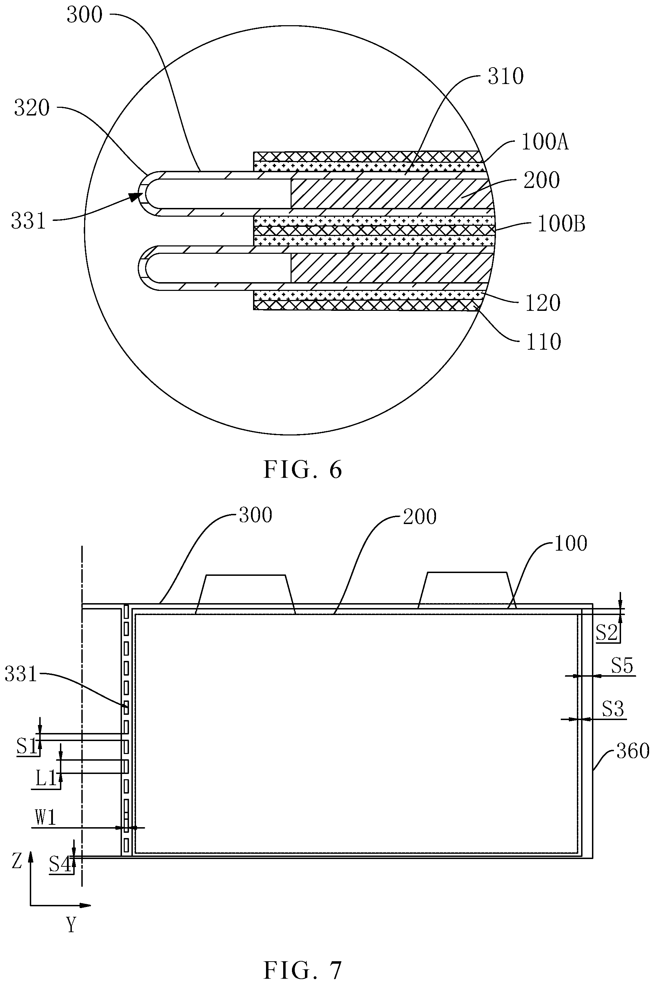

In some embodiments, as illustrated in FIG. 1 and FIG. 7, the incomplete-cut-off structures 330 include a plurality of through holes 331 penetrating the separator 300, and the plurality of through holes 331 are arranged at intervals in a width direction Z of the separator 300. Alternatively, the plurality of through holes 331 are arranged in an array and present in multiple columns of through holes 331 in a length direction Y of the separator 300. Each column of the through holes 331 can be arranged in the width direction Z of the separator 300. In some embodiments, arrangement directions of multiple columns of the through holes 331 can be parallel to each other. In some embodiments, an angle may be formed between an arrangement direction of at least one column of the through holes 331 and arrangement directions of other columns of the through holes 331. For example, the angle is less than or equal to 10°, for example, 1°, 2°, 5°, or the like. In some embodiments, the angle may be greater than 10°, and the disclosure does not limit on this. In some embodiments, among any two columns of the through holes 331, one column of a plurality of through holes 331 and another column of a plurality of through holes 331 are arranged one-to-one in opposition. In some embodiments, at least one column of a plurality of through holes 331 are staggered with a plurality of through holes 331 in other columns. If orthographic projections of two columns of the through holes 331 in the length direction Y of the separator 300 do not overlap with each other, it can be considered that the two columns of the through holes 331 are staggered with each other. For example, among any adjacent two columns of the through holes 331, one column of a plurality of through holes 331 are staggered with another column of a plurality of through holes 331.

In some embodiments, the incomplete-cut-off structures 330 include a plurality of slits spaced from each other. The slits can be obtained by cutting a separator with a tool or the like.

As illustrated in FIG. 4, when the separator 300 includes the first separator 340 and the second separator 350, the incomplete-cut-off structures 330 on the first separator 340 are the through holes 331 penetrating the first separator 340, and the incomplete-cut-off structures 330 on the second separator 350 are the through holes 331 penetrating the second separator 350. When the incomplete-cut-off structures 330 are disposed on both the first separator 340 and the second separator 350, the through holes 331 in the first separator 340 are opposite to the through holes 331 in the second separator 350, and the through holes 331 in the first separator 340 are communicated with the through holes 331 in the second separator 350.

It can be understood that by setting the plurality of through holes 331 in the separator 300 as the incomplete-cut-off structures 330, materials originally used to prepare local part of the separator 300 are omitted, so that the separator 300 is not completely cut off in the width direction of the separator 300. Compared to the separator 300 being completely cut off, the situation that the separator 300 shrinks and wrinkles caused by stress changes will not occur. Moreover, since the separator 300 around the through holes 331 is thinner, when performing free-fall folding, the separator 300 will be folded along the through holes 331 to achieve precise folding at the position where the through holes 331 are located, which is conducive to the alignment of the negative electrode sheets 100 and the positive electrode sheets 200 in the laminated cell.

In some embodiments, as illustrated in FIG. 1 and FIG. 7, FIG. 7 is a labeled diagram of the thermal composite laminated cell provided in some embodiments of the disclosure. Distances between any adjacent two through holes 331 are the same, in which a distance between adjacent two through holes 331 refers to a distance between a side of one of the adjacent two through holes 331 and a side of another one of the adjacent two through holes 331 in the width direction Z of the separator 300.

In some embodiments, the distances between any adjacent two through holes 331 are the same, which is conducive to forming the through holes 331 in the separator 300, making the strength of the separator 300 at the lines where the plurality of through holes 331 are located the same, and avoiding the situation that the separator 300 is torn due to weak local strength during the laminated process.

In some embodiments, the through holes 331 has a regular shape, such as circle, rectangle, ellipse, hexagon, or octagon. In other embodiments, the through holes 331 may have irregular shapes.

In some embodiments, as illustrated in FIG. 7, a distance between adjacent two through holes 331 in the width direction Z of the separator 300 is defined as S1, in which 5 mm ≤ S1 ≤ 20 mm. For example, S1 may be 5.0 mm, 5.2 mm, 5.7 mm, 7.8 mm, 9.0 mm, 10.5 mm, 11.5 mm, 12.3 mm, 13.9 mm, 14.0 mm, 15.7 mm, 16.1 mm, 17.4 mm, 18.0 mm, 19.6 mm, 20.0 mm, or the like.

In the embodiments of the disclosure, by setting the distance S1 between adjacent two through holes 331 to be greater than or equal to 5 mm, it can avoid the situation where the distance between adjacent two through holes 331 is too small and the number of the through holes 331 is too large, which affects the structural strength of the separator 300. Moreover, by setting the distance S1 between adjacent two through holes 331 to be less than or equal to 20 mm, it can avoid the situation where the distance between adjacent two through holes 331 is too small and the number of the through holes 331 is too small, which fails to play the role of positioning and folding during the laminated process. The distance between adjacent two through holes 331 is reasonably designed to ensure the folding quality.

In some embodiments, as illustrated in FIG. 7, at least one of the through holes 331 is rectangular, and at least one of the through holes 331 has a first size L1 and a second size W1. The first size L1 is a distance between two virtual parallel planes abutting against two side hole walls of one of the through holes 331, and the second size W1 is a distance between two virtual parallel planes abutting against two end hole walls of one of the through holes 331, in which 1 mm ≤ L1 ≤ 20 mm, and/or 1 mm ≤ W1 ≤ 2 mm. The two side hole walls refer to two opposite side walls of one of the through holes 331 extending in the width direction Z of the separator 300, and the two end hole walls refer to two opposite side walls of one of the through holes 331 extending in the length direction Y of the separator 300. For example, the first size L1 may be 1.1 mm, 1.2 mm, 1.5 mm, 2.3 mm, 3.4 mm, 4.2 mm, 5.0 mm, 6.8 mm, 7.8 mm, 8.8 mm, 9.0 mm, 10.3 mm, 11.1 mm, 12.5 mm, 13.8 mm, 14.1 mm, 15.0 mm, 16.6 mm, 17.7 mm, 18.2 mm, 19.1 mm, 20.0 mm, or the like; and the second size W1 may be 1.1 mm, 1.2 mm, 1.4 mm, 1.5 mm, 1.8 mm, 2.0 mm, or the like.

It should be noted that the two virtual parallel planes abutting against two side hole walls of one of the through holes 331 are only introduced for the convenience of understanding the first size and the second size, and do not actually exist in the solutions of the disclosure. For example, each of the through holes 331 may have a rectangular outer contour. To determine the first size and the second size, it can be assumed that there are two sets of planes, and each set of the planes includes two parallel planes arranged at intervals. The two virtual parallel planes in each set can jointly abut against two opposite hole walls of one of the through holes 331. There is only one distance between two parallel planes in each set, in which the first size is the distance between two planes that are respectively abutting against two opposite side hole walls of one of the through holes 331, and the second size is the distance between two planes that are respectively abutting against two opposite end hole walls of one of the through holes 331.

It can be understood that the size of the through holes 331 in the embodiments is reasonably designed to avoid affecting the structural strength of the separator 300 due to the size of the through holes 331 being too large, or to avoid the inability to position and fold during the laminated process due to the size of the through holes 331 being too small.

In some embodiments, as illustrated in FIG. 1, FIG. 5, FIG. 6, and FIG. 7, a long side size of one of the negative electrode sheets 100 is greater than a long side size of one of the positive electrode sheets 200, and a wide side size of one of the negative electrode sheets 100 is greater than a wide side size of one of the positive electrode sheets 200. In the thermal composite laminated cell, orthographic projections of the positive electrode sheets 200 on the plane where the negative electrode sheets 100 are located, are completely within the continuous planar area surrounded by the outer contour of the negative electrode sheets 100 in the thickness direction X of the negative electrode sheets 100.

It can be understood that by designing the size of the negative electrode sheets 100 to be larger than that of the positive electrode sheets 200, during the charging process of lithium batteries, the negative electrode sheets 100 can completely receive lithium ions from the positive electrode sheets 200, reducing the probability of the precipitation of lithium, avoiding the occurrence of short circuit and thermal runaway caused by the precipitation of lithium that pierces the separator 300, thereby improving the reliability of the batteries.

In some embodiments, as illustrated in FIG. 7, the distance between a long side of one of the positive electrode sheets 200 and a long side of one of the negative electrode sheets 100 is defined as S2, and a distance between a wide side of one of the positive electrode sheets 200 and a wide side of one of the negative electrode sheets 100 is defined as S3, in which 1 mm ≤ S2 ≤ 3 mm and 1 mm ≤ S3 ≤ 3 mm. For example, S2 and S3 may be 1 mm, 1.3 mm, 1.7 mm, 1.8 mm, 2.0 mm, 2.3 mm, 2.7 mm, 3.0 mm, or the like.

In some embodiments, the distance S2 and the distance S3 are the same or different, and the disclosure does not limit on this.

It can be understood that, in some embodiments, on the premise of meeting the safety performance of the batteries, the distance S2 and the distance S3 are reasonably designed to avoid the material waste caused by the size being too large, thereby reducing the cost. Moreover, due to the good alignment of the laminated cell, the size of the negative electrode sheets 100 exceeding the positive electrode sheets 200 can be appropriately shortened, reducing the materials used to prepare the negative electrode sheets, and further reducing the cost.

In some embodiments, as illustrated in FIG. 1, FIG. 4, FIG. 6, and FIG. 7, a long side size of one of the body parts 310 is greater than the long side size of one of the negative electrode sheets 100, and a wide side size of one of the body parts 310 is greater than the wide side size of one of the negative electrode sheets 100. It can be understood that the size of one of the body parts 310 is larger than that of one of the negative electrode sheets 100, indicating that an orthographic projection of one of the negative electrode sheets 100 on one of the body parts 310 is completely within the continuous planar area surrounded by the outer contour of one of the body parts 310.

The negative electrode sheets 100 and the positive electrode sheets 200 are separated by the body parts 310. If the size of the body parts 310 is smaller than the size of the negative electrode sheets 100, the negative electrode sheets 100 may be in direct contact with the positive electrode sheets 200, causing short circuit and thermal runaway. By designing the size of the body parts 310 to be larger than the size of the positive electrode sheets 200, it can meet the electrical safety requirements of the thermal composite laminated cell and improve its reliability.

In some embodiments, as illustrated in FIG. 7, a distance between the long side of one of the negative electrode sheets 100 and a long side of the separator 300 is defined as S4, in which 2 mm ≤ S4 ≤ 4 mm; and/or, the separator 300 includes a starting end 360, and a distance between the starting end 360 and a wide side of one of the negative electrode sheets 100 closest to the starting end 360 is defined as S5, in which 1 mm ≤ S5 ≤ 3mm. The long side of one of the negative electrode sheets 100 refers to a side of one of the negative electrode sheets 100 extending in the length direction Y of the separator 300, and the wide side of one of the negative electrode sheets 100 refers to a side of one of the negative electrode sheets 100 extending in the width direction Z of the separator 300.

In some embodiments, S4 may be 2.1 mm, 2.3 mm, 2.7 mm, 3.0 mm, 3.4 mm, 3.8 mm, 3.9 mm, 4 mm, or the like.

In some embodiments, S5 may be 1.1 mm, 1.2 mm, 1.5 mm, 1.6 mm, 1.8 mm, 1.9 mm, 2 mm, 2.3 mm, 2.5 mm, 2.7 mm, 2.8 mm, 2.9 mm, 3 mm, or the like.

In some embodiments, S4 and S5 are the same or different, and the disclosure does not limit on this.

It can be understood that, on the premise of meeting the electrical safety requirement, the sizes of the negative electrode sheets 100 and the separator 300 are reasonably designed, which avoids the material waste caused by the size of the separator 300 being too large, and further reduces the processing cost.

In some embodiments, as illustrated in FIG. 4, a thickness of the negative current collector 110 is defined as D1, in which 4.0 µm ≤ D1 ≤ 6.0 µm. For example, D1 may be 4.0 µm, 4.1 µm, 4.7 µm, 5.0 µm, 5.4 µm, 5.6 µm, 6.0 µm, or the like. The thickness of the negative current collector 110 is reasonably designed to meet the electrical requirements of the negative electrode sheets 100.

In some embodiments, a thickness of the negative active layer 120 is defined as D2, in which 50 µm ≤ D2 ≤ 200 µm. For example, D2 may be 50 µm, 65 µm, 72 µm, 89 µm, 95 µm, 108 µm, 117 µm, 122 µm, 136 µm, 144 µm, 159 µm, 162 µm, 175 µm, 187 µm, 198 µm, 200 µm, or the like. The thickness of the negative active layer 120 is reasonably designed to meet the electrical requirements of the negative electrode sheets 100.

In some embodiments, at least one of the positive electrode sheets 200 includes a positive current collector and two positive active layers, and the two positive active layers are disposed on two opposite sides of the positive current collector, respectively. For example, a material of the positive current collector is aluminum foil, and a material of the positive active layers is one or more of lithium cobalt oxide, lithium nickel oxide, lithium manganese oxide, lithium nickel cobalt manganese oxide, and lithium iron phosphate.

As illustrated in FIG. 1, FIG. 2, FIG. 3, FIG. 4, and FIG. 8, some embodiments of the disclosure further provide a method for preparing the thermal composite laminated cell of any of the above-mentioned embodiments, including the following steps:
Step S10, providing N negative electrode sheets 100, M positive electrode sheets 200, the first separator 340, and the second separator 350, in which N is greater than M, and a value of a difference between N and M is 1. The N negative electrode sheets 100 include N-2 double-sided electrode sheets 100A and two single-sided electrode sheets 100B;
in which two negative active layers 120 are respectively disposed on two opposite surfaces of the negative current collector 110 of each of the double-sided electrode sheets 100A, and one negative active layer 120 is disposed on one surface of the negative current collector 110 of each of the single-sided electrode sheets 100B.

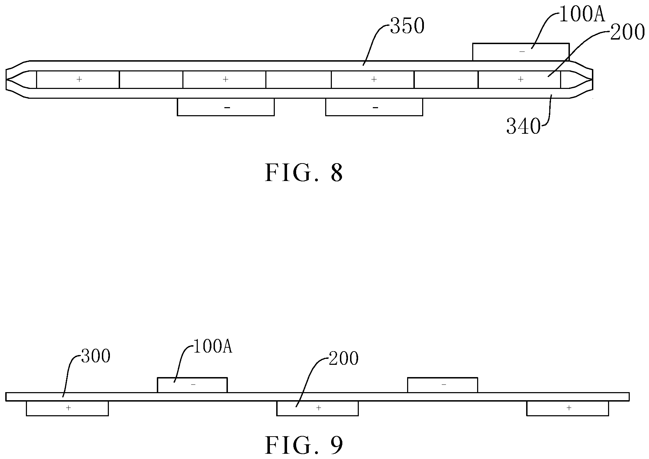

Step S20, thermally compounding the double-sided electrode sheets 100A, the positive electrode sheets 200, the first separator 340, and the second separator 350 to form a plurality of laminated layers, as illustrated in FIG. 8. M positive electrode sheets 200 are alternately arranged between the first separator 340 and the second separator 350, the first separator 340 and the second separator 350 between adjacent two positive electrode sheets 200 are thermally compounded, and the double-sided electrode sheets 100A are alternately arranged on a side of the first separator 340 away from the positive electrode sheets 200 and a side of the second separator 350 away from the positive electrode sheets 200. The double-sided electrode sheets 100A are aligned with the positive electrode sheets 200, and the laminated layers are processed to form the incomplete-cut-off structures 330. The incomplete-cut-off structures 330 are disposed in at least one of the first separator 340 and the second separator 350 that are between adjacent positive electrode sheets 200;
in which the number of the double-sided electrode sheets 100A is one less than the number of the positive electrode sheets 200. The double-sided electrode sheets 100A are aligned with the positive electrode sheets 200, including the following two situations: N-2 double-sided electrode sheets 100A are aligned with the second to the Mth positive electrode sheets, or N-2 double-sided electrode sheets 100A are aligned with the first to the (M-1)th positive electrode sheets. The N-2 double-sided electrode sheets 100A are aligned with the positive electrode sheets 200, indicating that the orthographic projection of the positive electrode sheets 200 in the thickness direction is within the plane where the double-sided electrode sheets 100A are located.

In some embodiments, all the positive electrode sheets 200 can be thermally compounded with the first separator 340 and the second separator 350, and then all the double-sided electrode sheets 100A are thermally compounded. Alternatively, the positive electrode sheets 200 and the negative electrode sheets 100 can be alternately and thermally compounded with the first separator 340 and the second separator 350 to form a plurality of laminated layers. The incomplete-cut-off structures 330 can be formed after the laminated layers are prepared, or the incomplete-cut-off structures 330 can be formed after the thermal compounding of a single positive electrode sheet 200 is completed. The disclosure does not limit on this.

Step S30, folding the laminated layers along the lines where the incomplete-cut-off structures 330 are located to form a plurality of laminated units, and thermally compounding two single-sided electrode sheets 100B respectively on two outermost sides of the laminated units to form the thermal composite laminated cell. The negative active layer 120 of each of the negative electrode sheets 100 is in contact with the first separator 340 or the second separator 350.

In the embodiments of the disclosure, after the first separator 340, the second separator 350, the negative electrode sheets 100, and the positive electrode sheets 200 are thermally compounded, the incomplete-cut-off structures 330 are formed on at least one of the first separator 340 and the second separator 350, and then the laminated layers are folded in a free-fall manner along the incomplete-cut-off structures 330. The first separator 340 and/or the second separator 350 at the incomplete-cut-off structures 330 are subjected to lower stress, enabling the laminated layers to be folded in a Z-shape along the lines where the incomplete-cut-off structures 330 are located, achieving the positioning folding, and ensuring the alignment of the thermal composite laminated cell.

In some embodiments, as illustrated in FIG. 5 and FIG. 6, FIG. 5 is a second cross-sectional view taken along line A-A in FIG. 2, and FIG. 6 is a local enlarged view at position B in FIG. 5. The separator 300 is a single-layer separator, and the negative electrode sheets 100 and the positive electrode sheets 200 are disposed on two opposite sides of the separator 300, respectively. All the negative electrode sheets 100 are disposed on the same one side of the separator 300, and all the positive electrode sheets 200 are disposed on the same another side of the separator 300. The negative electrode sheets 100 and the positive electrode sheets 200 are alternatively arranged in the length direction of the separator 300. The incomplete-cut-off structures 330 are disposed in the separator 300 between adjacent one of the negative electrode sheets 100 and one of the positive electrode sheets 200. The separator 300 is folded in a Z-shape along the incomplete-cut-off structures 330, ensuring the alignment of the negative electrode sheets 100 and the positive electrode sheets 200 in the laminated cell.

As illustrated in FIG. 5, FIG. 6, and FIG. 7, some embodiments of the disclosure further provide a method for preparing the thermal composite laminated cell of any of the above-mentioned embodiments, including the following steps:
Step S10, providing N negative electrode sheets 100, M positive electrode sheets 200, and the separator 300, in which N is greater than M, and a value of a difference between N and M is 1. The N negative electrode sheets 100 include N-2 double-sided electrode sheets 100A and two single-sided electrode sheets 100B;
in which two negative active layers 120 are respectively disposed on two opposite surfaces of the negative current collector 110 of each of the double-sided electrode sheets 100A, and one negative active layer 120 is disposed on one surface of the negative current collector 110 of each of the single-sided electrode sheets 100B.

It can be understood that the negative electrode sheets 100 and the positive electrode sheets 200 are obtained by cutting a negative electrode material roll and a positive electrode material roll, respectively. During the production process, the cutting of all the required N negative electrode sheets 100 and M positive electrode sheets 200 can be completed; alternatively, before each of the negative electrode sheets 100 or each of the positive electrode sheets 200 is thermally compounded, the cutting of a single negative electrode sheet 100 or a single positive electrode sheet 200 can be completed.

Step S20, thermally compounding the double-sided electrode sheets 100A, the positive electrode sheets 200, and the separator 300 to form a plurality of laminated layers, as illustrated in FIG. 9. All the double-sided electrode sheets 100A are thermally compounded on one side of the separator 300, and M positive electrode sheets 200 are thermally compounded on another side of the separator 300. The double-sided electrode sheets 100A and the positive electrode sheets 200 are alternately arranged in the length direction Y of the separator 300, and N-2 double-sided electrode sheets 100A are disposed between the first positive electrode sheet 200 and the Mth positive electrode sheet 200. The laminated layers are processed to form the incomplete-cut-off structures 330, which are disposed in the separator 300 between one of the negative electrode sheets 100 and one of the positive electrode sheets 200.

It can be understood that the separator 300 is a single layer of separator. All the double-sided electrode sheets 100A are thermally compounded on one surface of the separator 300, and M positive electrode sheets 200 are thermally compounded on another surface of the separator 300. The gaps between any adjacent one of the negative electrode sheets 100 and one of the positive electrode sheets 200 are the same. The incomplete-cut-off structures 330 can be uniformly formed in the separator 300 after the processing of the laminated layers is completed, or the incomplete-cut-off structures 330 can be formed in the separator 300 after the processing of a single negative electrode sheet 100 or a single positive electrode sheet 200 is completed.

Step S30, folding the laminated layers in a Z-shape along the lines where the incomplete-cut-off structures 330 are located to form a plurality of laminated units, and thermally compounding two single-sided electrode sheets100B respectively on two outermost sides of the laminated units to form the thermal composite laminated cell. The negative active layer 120 of each of the negative electrode sheets 100 is in contact with the separator 300 to form the thermally composite cell.

In the embodiments, after the separator 300, the negative electrode sheets 100, and the positive electrode sheets 200 are thermally compounded, the incomplete-cut-off structures 330 are formed in the separator 300, and then the laminated layers are folded in a free-fall manner along the incomplete-cut-off structures 330. The separator 300 at the incomplete-cut-off structures 330 is subjected to lower stress during the folding process, enabling the laminated layers to be folded in a Z-shape along the lines where the incomplete-cut-off structures 330 are located, improving the folding efficiency and the folding quality.

In the above-mentioned embodiments, the description of each embodiment has its own emphasis. For the parts that are not detailed in a certain embodiment, please refer to the relevant description of other embodiments.

In the description of the disclosure, the terms "first" and "second" are only used for descriptive purposes and cannot be understood as indicating or implying relative importance or implicitly specifying the number of indicated technical features. Thus, the features defined as "first" and "second" may explicitly or implicitly include one or more features.

The above provides a detailed introduction to the thermal composite laminated cell and the method for preparing the thermal composite laminated cell provided in the embodiments of the disclosure. Specific embodiments are applied in this context to explain the principles and implementation methods of the disclosure. The explanation of the above-mentioned embodiments is only used to help understand the technical solutions and core ideas of the disclosure. For ordinary skilled in the art, there may be changes in the specific implementation methods and application scopes based on the ideas of the disclosure. Therefore, the contents of the disclosure should not be understood as limitations on the disclosure.

## Claims

1. A thermal composite laminated cell, **characterized in that** the thermal composite laminated cell comprises:
N negative electrode sheets (100), wherein N is a positive integer greater than 1;
M positive electrode sheets (200), wherein M is a positive integer greater than 1, N is greater than M, and a value of a difference between N and M is 1; and
a separator (300) comprising a plurality of body parts (310) and a plurality of bending parts (320) alternately and continuously arranged, wherein the negative electrode sheets (100) and the positive electrode sheets (200) are alternately stacked in a thickness direction of the negative electrode sheets (100), and adjacent one of the negative electrode sheets (100) and one of the positive electrode sheets (200) are separated by one of the body parts (310); and wherein the bending parts (320) are provided with incomplete-cut-off structures (330), and the separator (300) is folded at the incomplete-cut-off structures (330);
wherein two outermost negative electrode sheets (100) of the N negative electrode sheets (100) are single-sided electrode sheets (100B), and other negative electrode sheets (100) of the N negative electrode sheets (100) except for the two outermost negative electrode sheets (100) are double-sided electrode sheets (100A).

2. The thermal composite laminated cell of claim 1, **characterized in that** one of the single-sided electrode sheets (100B) comprises a negative current collector (110) and a negative active layer (120), and the negative active layer (120) is disposed on a surface of the negative current collector (110) close to the body parts (310); and/or
one of the double-sided electrode sheets (100A) comprises a negative current collector (110) and two negative active layers (120), and the two negative active layers (120) are disposed on two opposite surfaces of the negative current collector (110), respectively.

3. The thermal composite laminated cell of claim 1, **characterized in that** the separator (300) comprises a first separator (340) and a second separator (350), wherein the first separator (340) comprises a first body part (311) and a first bending part (321), the second separator (350) comprises a second body part (312) and a second bending part (322), and at least one of the first bending part (321) and the second bending part (322) is provided with the incomplete-cut-off structures (330).

4. The thermal composite laminated cell of claim 3, **characterized in that** both the first bending part (321) and the second bending part (322) are provided with the incomplete-cut-off structures (330), and an orthographic projection of the incomplete-cut-off structures (330) of the first bending part (321) on the second separator (350) overlaps with the incomplete-cut-off structures (330) of the second bending part (322).

5. The thermal composite laminated cell of any one of claims 1 to 4, **characterized in that** the incomplete-cut-off structures (330) comprise a plurality of through holes (331) penetrating the separator (300), and the plurality of through holes (331) are arranged at intervals in a width direction of the separator (300).

6. The thermal composite laminated cell of claim 5, **characterized in that** distances between every adjacent two of the through holes (331) are the same, and a distance between adjacent two of the through holes (331) in the width direction of the separator (300) is defined as S1, wherein 5 mm ≤ S1 ≤ 20 mm; or
a shape of the through holes (331) is circular or rectangular.

7. The thermal composite laminated cell of claim 5, **characterized in that** one of the through holes (331) has a first size L1 and a second size W1, the first size L1 is a distance between two virtual parallel planes abutting against two side hole walls of the one of the through holes (331), and the second size W1 is a distance between two virtual parallel planes abutting against two end hole walls of the one of the through holes (331), wherein 1 mm ≤ L1 ≤ 20 mm and/or 1 mm ≤ W1 ≤ 2 mm.

8. The thermal composite laminated cell of any one of claims 1 to 7, **characterized in that** a long side size of one of the negative electrode sheets (100) is greater than a long side size of one of the positive electrode sheets (200), and a wide side size of one of the negative electrode sheets (100) is greater than a wide side size of one of the positive electrode sheets (200); or
a long side size of one of the body parts (310) is greater than a long side size of one of the negative electrode sheets (100), and a wide side size of one of the body parts (310) is greater than a wide side size of one of the negative electrode sheets (100).

9. The thermal composite laminated cell of any one of claims 1 to 7, **characterized in that** a distance between a long side of one of the positive electrode sheets (200) and a long side of one of the negative electrode sheets (100) is defined as S2, wherein 1 mm ≤ S2 ≤ 3 mm; and/or
a distance between a wide side of one of the positive electrode sheets (200) and a wide side of one of the negative electrode sheets (100) is defined as S3, wherein 1 mm ≤ S3 ≤ 3 mm.

10. The thermal composite laminated cell of any one of claims 1 to 9, **characterized in that** a distance between the long side of one of the negative electrode sheets (100) and a long side of the separator (300) is defined as S4, wherein 2 mm ≤ S4 ≤ 4 mm; and/or
the separator (300) comprises a starting end (360), and a distance between the starting end (360) and the wide side of one of the negative electrode sheets (100) close to the starting end (360) is defined as S5, wherein 1 mm ≤ S5 ≤ 3 mm.

11. The thermal composite laminated cell of any one of claims 2 to 4, **characterized in that** a thickness of the negative current collector (110) is defined as D1, wherein 4 µm ≤ D1 ≤ 6 µm; and/or
a thickness of the negative active layer (120) is defined as D2, wherein 50 µm ≤ D2 ≤ 200 µm.

12. The thermal composite laminated cell of any one of claims 1 to 11, **characterized in that** one of the positive electrode sheets (200) comprises a positive current collector and two positive active layers, and the two positive active layers are disposed on two opposite surfaces of the positive current collector, respectively; or
the negative electrode sheets (100), the positive electrode sheets (200), and the separator (300) are thermally compounded and connected.

13. The thermal composite laminated cell of any one of claims 1 to 12, **characterized in that** the negative electrode sheets (100) are provided with a plurality of negative tabs (130), the positive electrode sheets (200) are provided with a plurality of positive tabs (210), and both the negative tabs (130) and the positive tabs (210) are partially located outside the separator (300);
wherein orthographic projections of all the negative tabs (130) in a thickness direction of the negative electrode sheets (100) overlap with each other, and orthographic projections of all the positive tabs (210) in the thickness direction of the negative electrode sheets (100) overlap with each other; or, an orthographic projection of the negative tabs (130) and an orthographic projection of the positive tabs (210) on a plane where the body parts (310) are located, are arranged side by side.

14. A method for preparing the thermal composite laminated cell as claimed in claim 1 or claim 2, **characterized in that** the method comprises:
providing N negative electrode sheets (100), M positive electrode sheets (200), and a separator (300), wherein the N negative electrode sheets (100) comprise N-2 double-sided electrode sheets (100A) and two single-sided electrode sheets (100B);
thermally compounding the N-2 double-sided electrode sheets (100A), the M positive electrode sheets (200), and the separator (300) to form a plurality of laminated layers, wherein the N-2 double-sided electrode sheets (100A) are thermally compounded on a side of the separator (300), the M positive electrode sheets (200) are thermally compounded on another side of the separator (300), and the N-2 double-sided electrode sheets (100A) and the M positive electrode sheets (200) are alternately arranged in a length direction of the separator (300); and treating the separator (300) in the laminated layers to form the incomplete-cut-off structures (330), wherein the incomplete-cut-off structures (330) are disposed on the separator (300) between one of the N-2 double-sided electrode sheets (100A) and one of the M positive electrode sheets (200); and
folding the laminated layers along lines where the incomplete-cut-off structures (330) are located to form a plurality of laminated units, and thermally compounding the two single-sided electrode sheets (100B) on two outermost sides of the laminated units, respectively, so as to form the thermal composite laminated cell.

15. A method for preparing the thermal composite laminated cell as claimed in any one of claims 2 to 13, **characterized in that** the method comprises:
providing N negative electrode sheets (100), M positive electrode sheets (200), and a separator (300) including a first separator (340) and a second separator (350), wherein the N negative electrode sheets (100) comprise N-2 double-sided electrode sheets (100A) and two single-sided electrode sheets (100B);
thermally compounding the N-2 double-sided electrode sheets (100A), the M positive electrode sheets (200), the first separator (340), and the second separator (350) to form a plurality of laminated layers, wherein the M positive electrode sheets (200) are alternately arranged between the first separator (340) and the second separator (350), the N-2 double-sided electrode sheets (100A) are alternately arranged on a side of the first separator (340) away from the M positive electrode sheets (200) and a side of the second separator (350) away from the M positive electrode sheets (200), and the N-2 double-sided electrode sheets (100A) are aligned with the M positive electrode sheets (200); and treating the first separator (340) and the second separator (350) in the laminated layers to form the incomplete-cut-off structures (330), wherein the incomplete-cut-off structures (330) are disposed in at least one of the first separator (340) and the second separator (350) between adjacent two of the M positive electrode sheets (200); and
folding the laminated layers along lines where the incomplete-cut-off structures (330) are located to form a plurality of laminated units, and thermally compounding the two single-sided electrode sheets (100B) on two outermost sides of the laminated units, respectively, so as to form the thermal composite laminated cell.
